# EUROPEAN PATENT APPLICATION

(11) **EP 4 822 979 A1**
(43) Date of publication of application: **14.10.2026**
(21) Application number: 24900607.3
(22) Date of filing: 03.12.2024
(51) Int. Cl.: H02M 7/493, H02M 5/45, H02P 27/06

(54) **POWER CONVERSION DEVICE AND HEAT PUMP EQUIPMENT**

(30) Priority: 07.12.2023 JP 2023206932
(71) Applicant: Carrier Japan Corporation, Tokyo 141-0032 (JP)
(72) Inventor: KANAMORI, Masaki, Fuji-shi, Shizuoka 416-8521 (JP); NISHIO, Motoki, Fuji-shi, Shizuoka 416-8521 (JP)
(74) Representative: Dehns
(86) International application number: PCT/JP2024/042695
(87) International publication number: WO 2025/121313

(57) **Abstract**

A power conversion device of an embodiment includes a rectifier circuit that rectifies an AC voltage supplied from an AC power supply, a first power storage element connected to a DC side of the rectifier circuit, a first power converter connected in parallel to the first power storage element and having each-phase output terminals to which one ends of each-phase windings of a motor are connected, the windings being independent, a second power converter having each-phase output terminals to which the other ends of the windings of the motor are connected, a second power storage element connected to a DC side of the second power converter, a reactor branched from and connected to an interconnection line that connects the AC power supply and the rectifier circuit, a third power converter connected between the reactor and the second power storage element, a short circuit arranged so as to short-circuit the each-phase output terminals of the first or the second power converter, and a control unit that controls the third power converter so as to suppress harmonics that flows toward the AC power supply and switches between and executes an operation mode of bringing the short circuit into an open state to drive the motor by the first and second power converters and an operation mode of bringing the short circuit into a short-circuit state to drive the motor by either the first or second power converter.

## Description

### Technical Field

Embodiments of the present invention relate to a power conversion device that drives a motor having an open-winding structure and heat pump equipment including the power conversion device.

### Background Art

In order to achieve an increase in capacity of a power conversion device that drives a motor and an increase in speed of the motor, a dual inverter system is known which drives an open-winding motor having windings which are independent in respective phases by two inverters. However, if the two inverters are always operated, loss in switching elements in the inverters increases. Particularly in a low-load state, operating the two inverters is a waste of power even though only one inverter is supposed to be capable of driving the motor.

To deal with this, in Patent Literature 1, interconnection lines between an open-winding motor and one of inverters are provided with a relay that short-circuits these interconnection lines to each other. When the motor has a low rpm at which an induced voltage of the motor is low, this relay is short-circuited to change windings of the open-winding motor to a star connection state to drive the motor by one of the inverters and to stop the other inverter, thereby reducing power loss. However, in a three-phase input power conversion device, a current flows from a maximum phase to only a minimum phase of a three-phase alternating current. Thus, an input current cannot be controlled to have a sinusoidal wave merely by switching in the power converter for driving the motor.

In addition, Patent Literature 2 describes that a single-phase input power conversion device having a small-capacity film capacitor mounted thereon can reduce harmonics in an input current to improve a power factor.

Also in the aforementioned dual inverter system, a small-capacity capacitor can be used in a DC portion, but also in this case, an input current cannot be controlled to have a sinusoidal wave merely by switching in the power converter for driving the motor as mentioned earlier in the case in which the three-phase AC power supply is used as a power supply.

In addition, Patent Literature 3 discloses a system in which a matrix converter is applied to a primary-side inverter.

### Citation List

### Patent Literature

Patent Literature 1: Japanese Patent No. 7218131
Patent Literature 2: Japanese Patent No. 4391768
Patent Literature 3: Japanese Patent No. 5531238

### Summary of Invention

### Technical Problem

Although in the configuration of Patent Literature 3, a three-phase input current can be controlled to have a sinusoidal wave, components rated equivalently to or higher than a rated capacity of the power conversion device should be selected for semiconductor devices for a matrix converter, a choke coil to be used in an AC filter, and the like. This raises problems such as an increase in size of the entire power conversion device and an increase in cost.

Thus, a power conversion device that can suppress harmonics with high efficiency even in the dual inverter system and heat pump equipment including the power conversion device are provided.

### Solution to Problem

A power conversion device of an embodiment includes a rectifier circuit that rectifies an AC voltage supplied from an AC power supply, a first power storage element connected to a DC side of the rectifier circuit, a first power converter that is composed of diodes and semiconductor switches connected in parallel to the first power storage element and that has each-phase output terminals to which one ends of each-phase windings of a motor are connected, the windings being independent, a second power converter that has each-phase output terminals to which the other ends of the windings of the motor are connected and that is composed of diodes and semiconductor switches, a second power storage element connected to a DC side of the second power converter, a reactor branched from and connected to an interconnection line that connects the AC power supply and the rectifier circuit, a third power converter that is composed of diodes and semiconductor switches connected between the reactor and the second power storage element, a short circuit arranged so as to short-circuit the each-phase output terminals of the first power converter or the second power converter, and a control unit that controls switching of the third power converter so as to suppress harmonics that flows from the rectifier circuit toward the AC power supply, and switches between and executes an operation mode of bringing the short circuit into an open state to drive the motor by the first power converter and the second power converter and an operation mode of bringing the short circuit into a short-circuit state to drive the motor only by either the first power converter or the second power converter.

In addition, a power conversion device of an embodiment includes a rectifier circuit that rectifies an AC voltage supplied from an AC power supply, a first power storage element connected to a DC side of the rectifier circuit, a first power converter that is composed of diodes and semiconductor switches connected in parallel to the first power storage element and that has each-phase output terminals to which one ends of each-phase windings of a motor are connected, the windings being independent, a second power converter that has each-phase output terminals to which the other ends of the windings of the motor are connected and that is composed of diodes and semiconductor switches, a second power storage element connected to a DC side of the second power converter, a reactor branched from and connected to an interconnection line that connects the AC power supply and the rectifier circuit, a third power converter that is composed of diodes and semiconductor switches connected between the reactor and the second power storage element and that suppresses harmonics, a first short circuit arranged so as to short-circuit the each-phase output terminals of the first power converter, a second short circuit arranged so as to short-circuit the each-phase output terminals of the second power converter, and a control unit that switches among and executes a plurality of operation modes obtained by combining short-circuit and open states of the first short circuit and the second short circuit and states in which the motor is driven by the first power converter and the second power converter.

In addition, heat pump equipment of an embodiment includes the power conversion device of the embodiment, and the motor, in which a compressor is driven by the motor.

### Brief Description of Drawings

[Figure 1] Figure 1 is a diagram showing a configuration of a power conversion device in a first embodiment.
[Figure 2] Figure 2 is a diagram showing a configuration of an air conditioner.
[Figure 3] Figure 3 is a flowchart showing processing content of operation mode switching.
[Figure 4] Figure 4 is a diagram equivalently showing a second operation mode.
[Figure 5] Figure 5 is a diagram showing a configuration of a power conversion device in a second embodiment.
[Figure 6] Figure 6 is a flowchart showing processing content of operation mode switching.
[Figure 7] Figure 7 is a diagram equivalently showing a third operation mode.
[Figure 8] Figure 8 is a diagram showing a configuration of a power conversion device in a third embodiment.
[Figure 9] Figure 9 is a flowchart showing processing content of operation mode switching.
[Figure 10] Figure 10 is a diagram equivalently showing the second operation mode.
[Figure 11] Figure 11 is a diagram equivalently showing the third operation mode.
[Figure 12] Figure 12 is a flowchart showing processing content of a regenerative absorption operation in a fourth embodiment.
[Figure 13] Figure 13 is a diagram showing a switching state of each inverter when the regenerative absorption operation is performed.
[Figure 14] Figure 14 is a timing chart showing current and voltage waveforms corresponding to processing content shown in Figure 13.
[Figure 15] Figure 15 is a diagram showing a switching state of each inverter when the regenerative absorption operation is performed in a fifth embodiment.

### Description of Embodiments

### (First Embodiment)

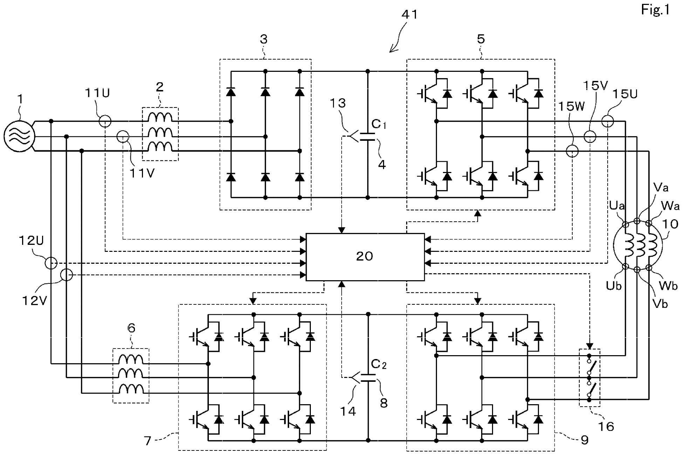

As shown in Figure 1, a motor 10 is to be driven by a power conversion device of the present embodiment. The motor 10 is assumed to be a three-phase permanent magnet synchronous motor, an induction machine, or the like, and shall be a permanent magnet synchronous motor in the present embodiment. The motor 10 is what is called an open-winding motor and has three-phase windings not connected to one another with both terminals in an open state. That is, the motor 10 includes six winding terminals Ua, Va, Wa, Ub, Vb, and Wb.

The motor 10 is driven in a dual inverter system by a first inverter 5 and a second inverter 9. The first inverter 5 and the second inverter 9 have an identical circuit configuration and are three-phase inverters having three pairs of two series-connected switching elements located on an upper arm side and a lower arm side with intermediate connection points of the respective series-connected switching elements serving as three output terminals. Respective-phase output terminals of the first inverter 5 are connected to the winding terminals Ua, Va, and Wa of the motor 10, respectively, and each-phase output terminals of the second inverter 9 are connected to the winding terminals Ub, Vb, and Wb of the motor 10, respectively.

A rectifier circuit 3 is connected to a three-phase AC power supply 1 via a three-phase reactor 2. The rectifier circuit 3 is composed of three-phase bridge-connected six diodes. The rectifier circuit 3 has output terminals to which a first capacitor 4 and the first inverter 5 are connected.

DC-side both end portions of a second capacitor 8 and a power converter 7 which are electrolytic capacitors, for example, are connected in parallel to the second inverter 9. Each of the second capacitor 8 and the first capacitor 4 only needs to be a rechargeable power storage element having a certain degree of capacity, and a storage battery, a battery, or the like may be used with an element replaced by a capacitor. In other words, the first capacitor 4 corresponds to a first power storage element, and the second capacitor 8 corresponds to a second power storage element. A high-voltage-side terminal and a low-voltage-side terminal of the first inverter 5, that is, both ends of the first capacitor 4, are not connected to the second inverter 9, and the second inverter 9 is independent. That is, the first inverter 5 and the second inverter 9 are connected at their output terminals only via the windings of the motor 10 in which respective phases are independent.

In addition, a short circuit 16 is arranged at the each-phase output terminals of the second inverter 9. The short circuit 16 is composed of a plurality of mechanical relays or a plurality of semiconductor switches to be turned on or off simultaneously. Figure 1 shows a case in which mechanical relays having two contact points is used. When the short circuit 16 is turned on, one of the relay contact points short-circuits U- and V-phases, and the other relay contact point short-circuits the V- and W-phases. That is, when the short circuit 16 is turned on, the each-phase output terminals of the second inverter 9 are short-circuited, thus bringing the motor 10 into a state in which it is star-connected on the winding terminals Ub, Vb, and Wb side.

The power converter 7 having the DC portion connected to the second capacitor 8 includes a circuit configuration of a three-phase inverter identical to the first and second inverters 5 and 9, and has each-phase output terminals connected to the three-phase AC power supply 1 via the three-phase reactor 6. A freewheeling diode is connected to each of the switching elements constituting the first inverter 5, the second inverter 9, and the power converter 7 in an antiparallel direction. They are each composed of three-phase bridge-connected semiconductor switching elements such as IGBTs, for example, and are equivalent to first to third power converters, respectively.

Current sensors 11U and 11V are arranged on U- and V-phases of power supply wires connecting the three-phase AC power supply 1 and the three-phase reactor 2. A W-phase current is calculated by computing from U- and V-phase currents detected by these current sensors 11U and 11V. In addition, current sensors 12U and 12V are arranged on U- and V-phases of power supply wires connecting the three-phase AC power supply 1 and the three-phase reactor 6. A W-phase current flowing in the three-phase reactor 6 is calculated by computing from U- and V-phase currents flowing in the three-phase reactor 6 and detected by these current sensors 12U and 12V.

Voltage sensors 13 and 14 detect terminal voltages of the first capacitor 4 and the second capacitor 8, respectively. Current sensors 15U, 15V, and 15W are arranged between the each-phase output terminals of the first inverter 5 and the winding terminals Ua, Va, and Wa of the motor 10, and detect currents flowing in the respective motor windings of the motor 10. Respective DC portions of the first inverter 5 and the second inverter 9 are both connected to the same three-phase AC power supply 1.
Accordingly, when the motor 10 is driven in the dual inverter system using the first inverter 5 and the second inverter 9, a zero-phase current flowing in the same direction in a predetermined cycle is produced in the each-phase windings. Thus, the respective current sensors 15U, 15V, and 15W are provided in association with the each-phase windings such that the zero-phase current and currents flowing in the respective motor windings can be detected distinctively.

Detection signals output from the above-described respective sensors 11 to 15 are input to a control unit 20. The control unit 20 is composed of a microcomputer and the like and based on the detection signals of the respective sensors 11 to 15, controls switching of the respective IGBTs constituting the first inverter 5, the second inverter 9, and the power converter 7. The configuration described above with the motor 10 excluded constitutes a power conversion device 41.

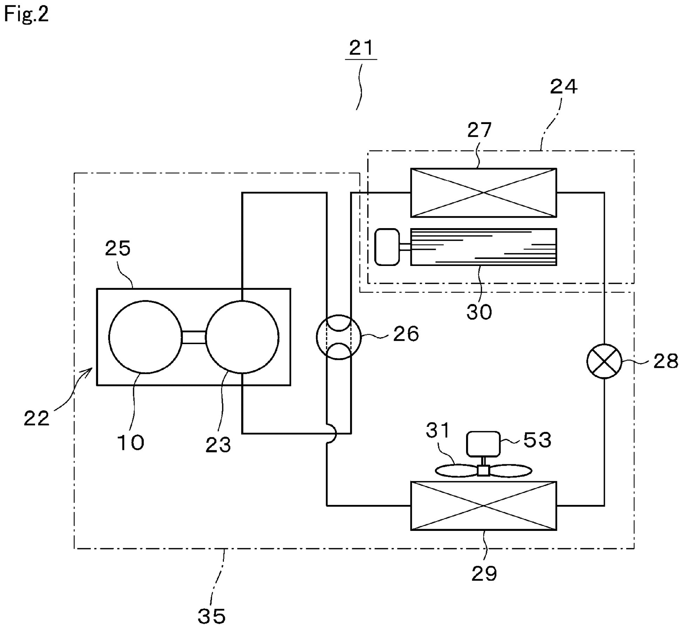

Figure 2 shows a configuration of an air conditioner which is heat pump equipment to which the power conversion device 41 is applied. Note that the heat pump equipment to which the power conversion device 41 is applied also includes a hot water generating device serving as a water heater, a chilled and hot water generating device such as a chiller, and the like besides the air conditioner. An air conditioner 21 is composed of an indoor unit 24, an outdoor unit 35, and a refrigerant pipe and a signal communication line that connect the indoor unit 24 and the outdoor unit 35. The indoor unit 24 installed indoors stores therein an indoor-side heat exchanger 27 and an indoor fan 30. On the other hand, the outdoor unit 35 is installed outdoors and stores equipment such as the control unit 20, a compressor 22, an outdoor-side heat exchanger 29, a four-way valve 26, a decompression device 28, an outdoor fan 31, and an outdoor fan motor 53.

The compressor 22 is composed of a compression unit 23 and the motor 10 stored in an identical iron airtight container 25, and the motor 10 has a rotor shaft coupled to the compression unit 23. The compressor 22, the four-way valve 26, the indoor-side heat exchanger 27, the decompression device 28, and the outdoor-side heat exchanger 29 are connected with a pipe serving as a refrigerant passage so as to constitute a closed loop. Note that the compressor 22 is a single-cylinder rotary compressor, for example, but is not limited thereto, and a multicylindered rotary-type compressor, scroll-type compressor, or reciprocating compressor can also be used.

At the time of heating, the four-way valve 26 is in a state indicated by a solid line, and a high-temperature refrigerant compressed in the compression unit 23 of the compressor 22 is supplied through the four-way valve 26 to the indoor-side heat exchanger 27 and is condensed to release heat in a room to heat the room. Thereafter, the refrigerant is decompressed in the decompression device 28 to be lowered in temperature, flows to the outdoor-side heat exchanger 29, absorbs heat there from outside air to be evaporated, and returns to the compressor 22.

On the other hand, at the time of cooling, the four-way valve 26 is switched to a state indicated by a broken line. Thus, the high-temperature refrigerant compressed in the compression unit 23 of the compressor 22 is supplied through the four-way valve 26 to the outdoor-side heat exchanger 29 to release heat outdoors and is condensed. Thereafter, the refrigerant is decompressed in the decompression device 28 to be lowered in temperature and flows to the indoor-side heat exchanger 27. The refrigerant absorbs heat there from indoor air to be evaporated, cools the room, and returns to the compressor 22. It is configured such that air is then blown to the respective indoor-side and outdoor-side heat exchangers 27 and 29 by the indoor fan 30 and the outdoor fan 31, respectively, and heat exchange is performed efficiently by the blown air between the heat exchanger 27 and indoor air and between the heat exchanger 29 and outdoor air.

Next, action of the present embodiment will be described. The control unit 20 that controls this power conversion device 41 as a whole is provided. The control unit 20 operates/stops the compressor 22, that is, the motor 10, based on an instruction from an indoor control unit not shown on the indoor unit 24 side, for example. Then, during working of the motor 10, the control unit 20 opens/closes the short circuit 16 in accordance with a load on the motor 10 and a rotating speed of the motor 10, for example. Specifically, at a high load or high rpm of the motor 10 or in a case in which input power is high, the short circuit 16 is brought into an open state to bring the motor 10 into an open winding state, and at a low load or low revolution or in a case in which input power is small, the short circuit 16 is brought into a short-circuit state to switch the motor 10 to a star connection state.

When the short circuit 16 is brought into the open state, that is, when the motor 10 is brought into the open winding state, the control unit 20 performs vector computing using current values detected by the current sensors 15U, 15V, and 15W as well as terminal voltages of the first capacitor 4 and the second capacitor 8 detected by the voltage sensors 13 and 14. The control unit 20 causes the respective switching elements of the first inverter 5 and the second inverter 9 to operate in conjunction based on a result of the computing to flow desired currents from both the inverters 5 and 9 to the respective windings of the motor 10, thus achieving variable speed driving of the motor 10.

On the other hand, in the case in which the short circuit 16 is brought into the short-circuit state to bring the motor 10 into the star connection state, the control unit 20 performs vector computing using the current values detected by the current sensors 15U, 15V, and 15W as well as the terminal voltage of the first capacitor 4 detected by the voltage sensor 13. The control unit 20 causes only the respective switching elements of the first inverter 5 to operate as appropriate based on a result of the computing to flow desired currents to the respective windings of the motor 10, thus achieving variable speed driving of the motor 10. In this case of driving the motor 10 in the star connection state, the second inverter is brought into an off state to turn off all of its switching elements.

On the other hand, the control unit 20 causes the power converter 7 to operate as an active filter circuit so as to suppress and reduce harmonics flowing in the power supply line during working of the motor 10 in either of the open winding state and the star connection state of the motor 10. Specifically, the control unit 20 extracts harmonic currents from the currents flowing in the respective phases of the reactor 2 detected by the current sensors 11U, 11V, and controls operation of the respective switching elements of the power converter 7 such that reactor currents in the respective phases detected by the current sensors 12U and 12V become correction currents that cancel harmonic currents flowing in the U, V, and W phases with the terminal voltage of the second capacitor 8 added. By virtue of this active filter circuit operation of the power converter 7, currents flowing from the rectifier circuit 3 toward the AC power supply 1 approach sinusoidal waves, so that a power supply harmonic can be suppressed.

Note that the second capacitor 8, which is a power storage element, has a certain degree of capacity, as it is used as a power supply for the correction currents output from the active filter circuit. Note that if a state occurs in which a very small amount of the harmonic currents is produced when the motor 10 is in the low-load state or the like, it is also possible to stop the power converter 7 to stop the active filter circuit operation.

By configuring the power conversion device 41 as described above, motor controllability through use of the dual inverter, which is composed of the first inverter 5 and the second inverter 9, and the motor 10 having the open winding configuration is improved. Since voltages are applied to the windings of the motor 10 by the two inverters 5 and 9, a working range of the motor 10 can be widened. In addition, since the voltages applied to the windings of the motor 10 are multileveled, core loss occurring in the motor 10 can be reduced.

Furthermore, by devising the method of driving the two inverters 5 and 9 by the control unit 20, power to be applied to the motor 10 can be controlled to be constant, and the working range in a high-speed region by means of reactive power injection can be widened. In addition, by connecting a negative electrode side of the DC portion of the power converter 7 and a negative electrode side of the DC portion of the second inverter 9, these circuits have a reference voltage in common. This can reduce insulating locations of a driving power supply, so that an increase in circuit scale and an increase in cost can be prevented.

On the other hand, when input power to the motor 10 at a low revolution is low, an induced voltage of the motor 10 decreases, so that a low voltage only needs to be applied. Thus, when the motor 10 is driven in the dual inverter system, efficiency becomes worse due to an increase in conduction loss in the semiconductor switches than when the motor 10 is driven by a single inverter as usual. In contrast to this, when the short circuit 16 is brought into the short-circuit state to short-circuit the three-phase outputs of the second inverter 9 to bring the motor 10 into the star connection state to be driven only by the first inverter 5, driving efficiency at a low revolution and a low load can be improved. At a high revolution, the motor 10 is driven in the open winding state by bringing the short circuit 16 into the open state, so that the advantage mentioned above can be utilized.

Furthermore, during working of the motor 10, the power supply harmonic produced by the power conversion device 41 can be suppressed by causing the power converter 7 to operate as an active filter circuit that performs switching control such that the currents flowing from the rectifier circuit 3 toward the AC power supply 1 approach sinusoidal waves irrespective of the winding state of the motor 10.

In addition, the second capacitor 8 is set to have an electrostatic capacitance larger than an electrostatic capacitance of the first capacitor 4. For example, a film capacitor is used as the first capacitor 4, and an electrolytic capacitor is used as the second capacitor 8. This can reduce the number of electrolytic capacitors used and can extend the life of the power conversion device 41. The first capacitor 4 only needs to have such a capacity that can cut down a harmonic component produced by switching the first inverter 5 and the second inverter 9 and such a capacity that a current that charges the first capacitor 4 at power-on does not exceed a tolerance of the diodes constituting the rectifier circuit 3. This capacity is in general approximately several ten microfarads. Accordingly, the three-phase reactor 2 can be reduced in size.

On the other hand, the capacity of the second capacitor 8 only needs to be settled based on a compensation capacitance of the power converter 7, output power of the second inverter 9, a ripple current flowing in the second capacitor 8, and the like. This capacity is in general approximately several hundred microfarads to several thousand microfarads. Note that the second capacitor 8 only needs to be a rechargeable power storage element, and a storage battery, a battery, or the like may be used instead of the electrolytic capacitor. In this case, a power storage capacitance of the power storage element is settled based on the compensation capacitance of the power converter 7, the output power of the second inverter 9, the ripple current flowing in the second capacitor 8, and the like, similarly to the second capacitor.

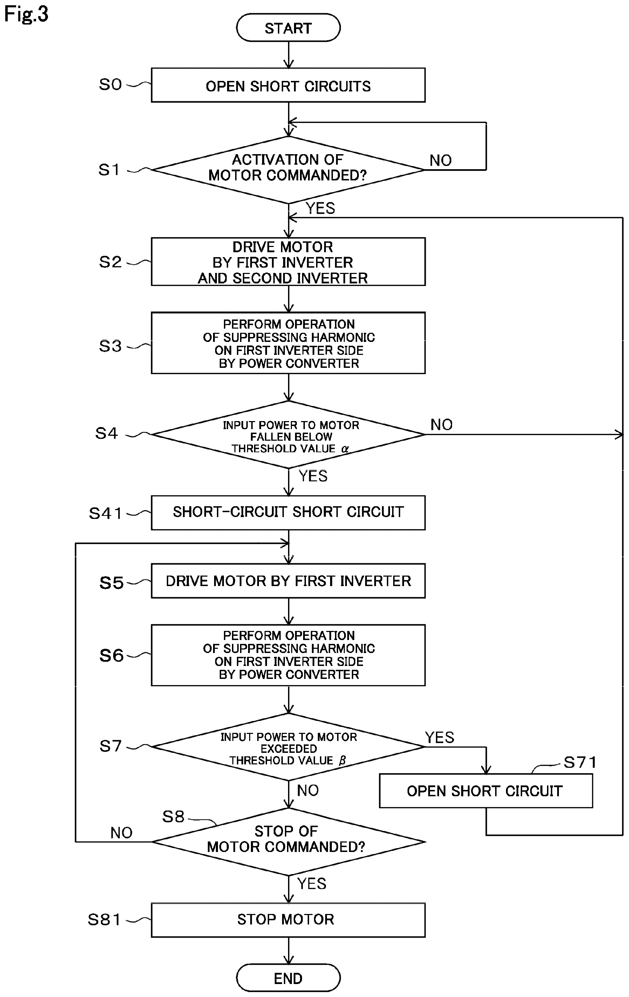

Hereinafter, a series of operations of the power conversion device 41 will be described. The control unit 20 brings the short circuit 16 into the open state in an initial state (S0). In that state, when a motor activation command is externally input to the control unit 20 (YES in S1), the motor 10 is driven in the open winding state by the first inverter 5 and the second inverter 9 (S2), as shown in Figure 3. In addition, the power converter 7 is caused to operate as the active filter circuit by performing switching control such that the currents flowing from the rectifier circuit 3 toward the AC power supply 1 approach sinusoidal waves. Accordingly, harmonics produced on the first inverter 5 side is suppressed (S3). Steps S2 and S3 correspond to a first operation mode. Note that if the motor activation command is not externally input in the initial state, that is, in the stop state of the motor 10 (NO in S1), the process returns to step S1 determining that the instruction is to be waited and continues the status quo.

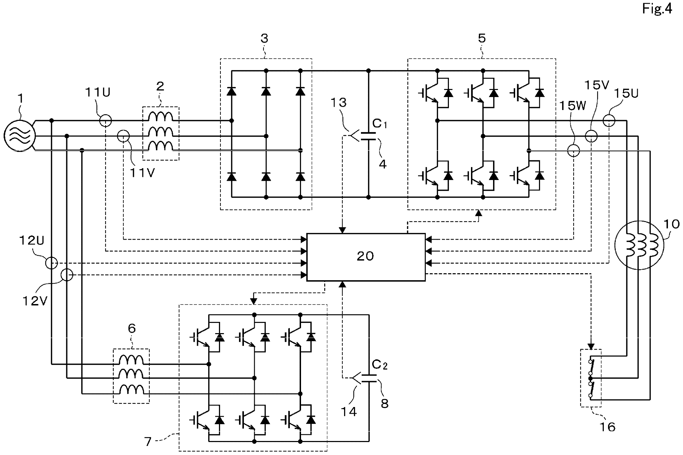

Subsequently, it is determined whether or not input power to the motor 10 has fallen below a threshold value α (S4), and if the input power has not fallen below the threshold value α (NO in S4), the process returns to step S2. If the above-described input power has fallen below the threshold value α (YES in S4), the short circuit 16 is brought into the short-circuit state (S41) to drive the motor 10 only by the first inverter 5 (S5). Figure 4 equivalently shows this state.

When processing of causing the power converter 7 to operate as the active filter circuit is performed in next step S6 similarly to step S3, the control unit 20 determines whether or not the input power to the motor 10 has exceeded a threshold value β (S7). Note that the threshold value β is set such that the threshold value β > the threshold value α holds in order to prevent frequent switching of the short circuit 16. If the above-described input power has exceeded the threshold value β (YES in S7), the short circuit 16 is switched to the open state (S71), and then the process returns to step S2. If the above-described input power has not exceeded the threshold value β (NO in S7), it is determined whether or not a motor stop command has externally been input to the control unit 20 (S8). If the motor stop command has not been input (NO in S8), the process returns to step S5. If the motor stop command has been input (YES in S8), the switching operation of all of the first inverter 5, the second inverter 9, and the power converter 7 is stopped to stop the motor 10 (S81). Steps S41, S5, and S6 correspond to a second operation mode.

According to the present embodiment as described above, in the power conversion device 41, the first capacitor 4 and the first inverter 5 are connected to the DC side of the rectifier circuit 3 that rectifies the AC voltage supplied from the AC power supply 1. One ends of the windings of the motor 10 having the open-winding structure are connected to the each-phase output terminals of the first inverter 5, and the other ends of the windings of the motor 10 are connected to the each-phase output terminals of the second inverter 9. The short circuit 16 is arranged at the each-phase output terminals. The reactor 6 branched from and connected to the interconnection lines that connect the AC power supply 1 and the rectifier circuit 3, the power converter 7, and the second capacitor 8 are connected to the DC side of the second inverter 9.

The control unit 20 controls switching of the power converter 7 such that the currents flowing from the rectifier circuit 3 toward the AC power supply 1 approach sinusoidal waves and switches between and executes the first operation mode of bringing the short circuit 16 into the open state to drive the motor 10 by the first and second inverters 5 and 9 and the second operation mode of bringing the short circuit 16 into the short-circuit state to drive the motor 10 only by the first inverter 5.

In the first operation mode, by driving the motor 10 in the dual inverter system, an applied voltage can be increased to widen the working range of the motor 10, and the applied voltage can be multileveled to reduce the core loss in the motor 10. In the case in which the three-phase AC power supply 1 is used, the power supply harmonic is generally settled by the reactor 2 for smoothing currents and the capacity of the first capacitor 4, and the input currents cannot be controlled by the first inverter 5 and the second inverter 9. By connecting the DC portions of the power converter 7 and the second inverter 9 to each other as in the present embodiment, insulation point of the driving power supply is reduced to enable simplification of the circuit. When a state is brought about in which the motor 10 has a low rpm and in which input power is small to a certain degree, switching is made to the second operation mode to short-circuit the each-phase outputs of the second inverter 9 by the short circuit 16, so that the motor 10 is driven in the star connection state only by the first inverter 5, thus enabling efficiency to be improved. Furthermore, during working of the motor 10, the power converter 7 is caused to operate as the active filter circuit, thus enabling the power supply harmonic of the power conversion device 41 to be suppressed.

### (Second Embodiment)

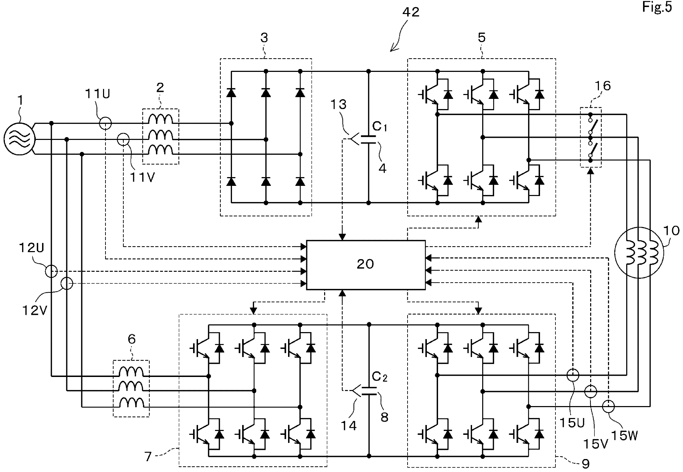

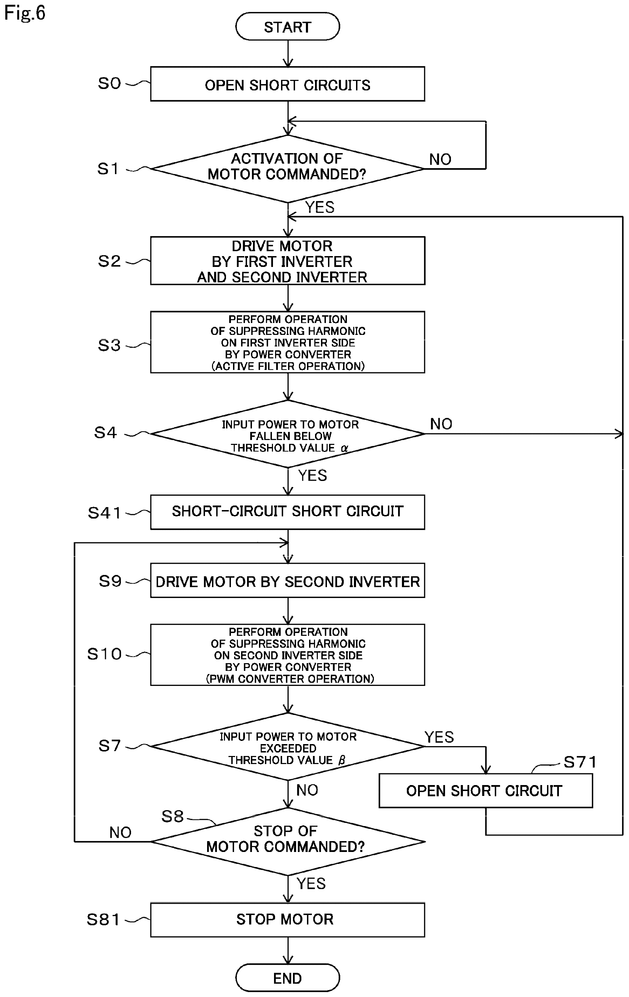

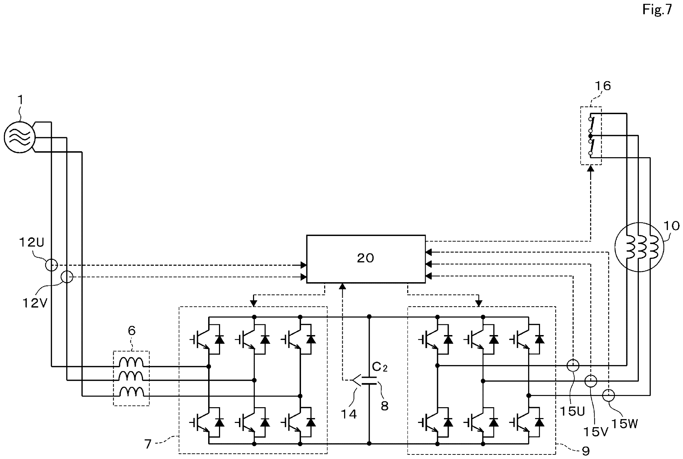

A second embodiment will be described next with reference to Figure 5. Hereinafter, the same portions as those of the first embodiment are denoted by the same reference numerals, description of which will be omitted, and different portions will be described. A power conversion device 42 of the second embodiment has a configuration in which the short circuit 16 of the power conversion device 41 is arranged toward the each-phase output terminals of the first inverter 5. In the second embodiment, the each-phase outputs of the first inverter 5 are short-circuited by the short circuit 16. Thus, in a control flowchart shown in Figure 6, the short circuit 16 is brought into the short-circuit state to drive the motor 10 only by the second inverter 9 in step S9 alternative to step S5. Thus, as shown in Figure 5, the current sensors 15U, 15V, and 15W that detect the currents in the each-phase windings of the motor 10 are relocated on interconnection lines between the each-phase windings of the motor 10 and the second inverter 9. Figure 7 equivalently shows this state. Steps S41, S9, and S10 correspond to a third operation mode.

In addition, in step S10 alternative to step S6, the harmonic suppression operation for the second inverter 9 side is performed by the power converter 7. The harmonic suppression operation herein is an operation performed by a PWM rectifier that stably controls the terminal voltage of the second capacitor 8 to be a target value. Herein, the control unit 20 performs PWM control over the respective switching elements of the power converter 7 such that the voltage across the second capacitor 8 detected by the voltage sensor 14 has a value higher than or equal to a DC voltage value obtained by rectifying the output of the commercial power supply 1. Through this operation of controlling the terminal voltage of the second capacitor 8 by the power converter 7, harmonics produced in the second inverter 9 can be suppressed. In general, the effect of suppressing the harmonic can be obtained by the PWM rectifier as a step-up voltage rises. However, when the step-up voltage rises, loss in the second inverter 9 when the motor 10 is driven increases. It is therefore desirable to set the value of the step-up voltage at the lowest possible voltage within a range in which the amount of production of harmonics can be kept within target values. The remaining control is similar to that of the first embodiment.

### (Third Embodiment)

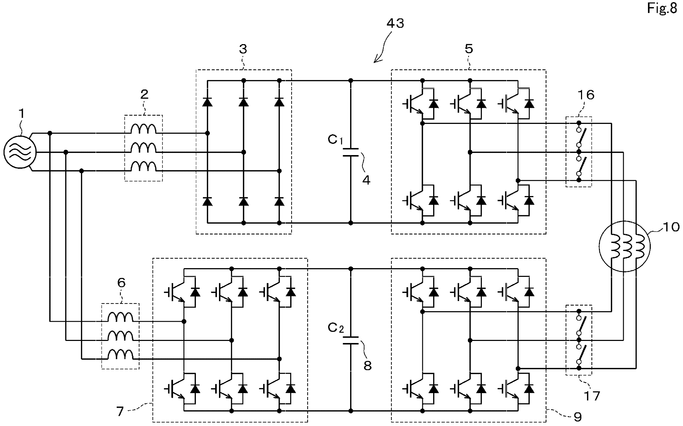

A power conversion device 43 of a third embodiment shown in Figure 8 has a configuration in which a new short circuit 17 is arranged toward the each-phase output terminals of the second inverter 9 in the power conversion device 42, that is, a configuration in which the first and second embodiments are combined.

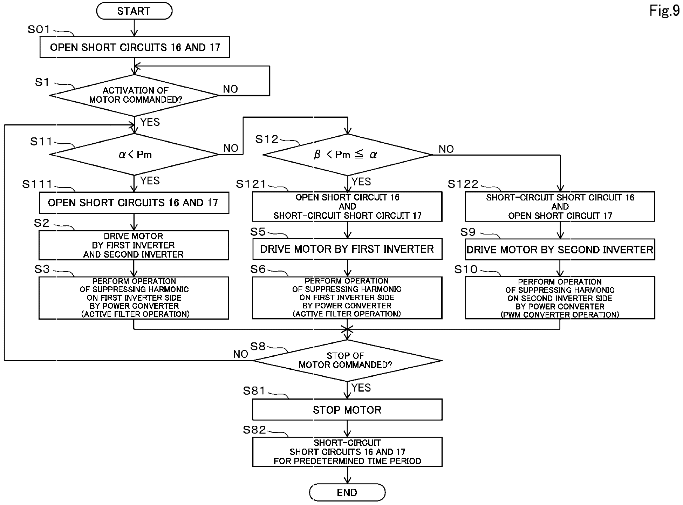

In a flowchart shown in Figure 9, the same step numbers as those in the flowchart of the first embodiment shown in Figure 6 means that the same operations are executed in the control unit 20. In the initial state, the short circuits 16 and 17 are both opened (S01). When it is determined "YES" in step S1 determining that activation of the motor has been commanded, it is determined whether input power Pm to the motor 10 has exceeded the threshold value α (S11), and if the input power Pm has exceeded the threshold value α (YES in S11), the short circuits 16 and 17 are opened in step S111, or if they are already in the open state, the open state is maintained, and steps S2 and S3, that is, the first operation mode, is executed. On the other hand, if the input power Pm has not exceeded the threshold value α in step S11 (NO in S11), the process proceeds to step S12. Note that if activation of the motor has not been commanded in step S1 (NO in S1), the status quo is maintained until activation of the motor is commanded.

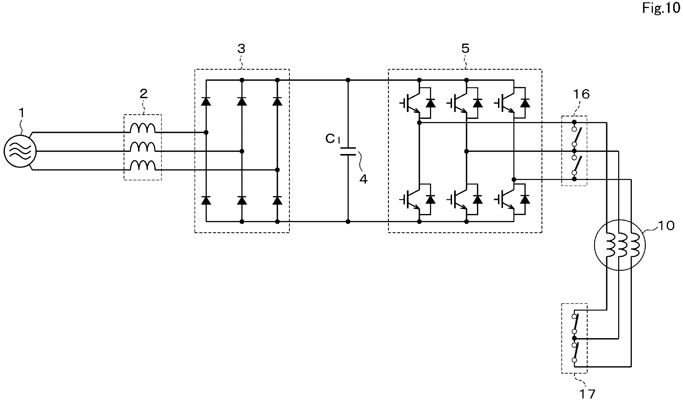

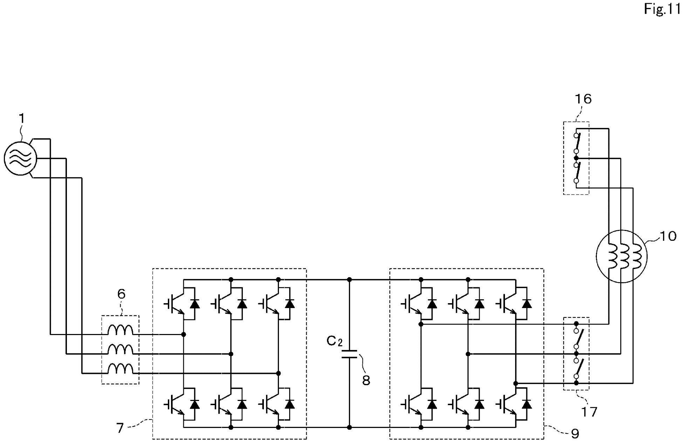

In step S12, it is determined whether the input power Pm is less than or equal to the threshold value α and has exceeded the threshold value β, and if the input power Pm is less than or equal to the threshold value α and has exceeded the threshold value β (YES in S12), the short circuit 16 is brought into the open state, and the short circuit 17 is closed (S121), and steps S5 and S6, that is, the second operation mode, is executed as shown in Figure 10. If the input power Pm is less than or equal to the threshold value β in step S12 (NO in S12), the short circuit 16 is closed, and the short circuit 17 is opened (S122), and steps S9 and S10, that is, the third operation mode, is executed as shown in Figure 11. In addition, when it is determined "YES" determining that stop of the motor has been commanded in step S8 subsequent to steps S3, S6, and S10, operation of the first inverter 5, the second inverter 9, and the power converter 7 is stopped to stop working of the motor 10 (S81). Furthermore, the short circuits 16 and 17 are both closed only for a predetermined time period which is an extremely short period until a regenerative current disappears (S82), thus short-circuiting both ends of the windings of the motor 10. Accordingly, the motor 10 is caused to consume regenerative energy to suppress an increase in voltage in the DC portion on the inverters 5 and 9 side. Thereafter, when the predetermined time period elapses, the process returns to the start, and processing in and after step S01 is repeated.

According to the third embodiment as described above, the short circuits 16 and 17 are arranged at the each-phase output terminals of the first inverter 5 and the each-phase output terminals of the second inverter 9, respectively, thus enabling the first to third operation modes to be switched and executed in accordance with the magnitude of the input power Pm to the motor 10.

### (Fourth Embodiment)

In the third embodiment, regenerative power when the motor 10 is at a stop is absorbed by stopping operation of the first inverter 5, the second inverter 9, and the power converter 7 and closing both the short circuits 16 and 17 (S81, S82). In a fourth embodiment, an example of a regenerative absorption operation in which the power conversion device 41 or 42 is used is shown. This is effective in a case in which the capacity of the first capacitor, that is, the capacitance, is set to be small to improve the power factor. For example, a film capacitor is used as the first capacitor 4, and a large-capacity electrolytic capacitor is used as the second capacitor 8. The use of a film capacitor that degrades over time to a small degree as an individual element as the first capacitor 43 can extend the life of the power conversion device 42.

The first capacitor 43 only needs to have such a capacity that can cut down a harmonic component produced by switching the first inverter 5 and the second inverter 9 and such a small capacity by which a current that charges the first capacitor 43 at power-on does not exceed the tolerance of the diodes constituting the rectifier circuit 3. This capacity is in general approximately several ten microfarads. Accordingly, the three-phase reactor 2 can also be reduced in size.

On the other hand, the capacity of the second capacitor 8 is settled based on the compensation capacitance of the power converter 7, the output power of the second inverter 9, the ripple current flowing in the second capacitor 8, and the like. Note that the second capacitor 8 only needs to be a rechargeable power storage element, and a storage battery, a battery, or the like may be used instead of the electrolytic capacitor.

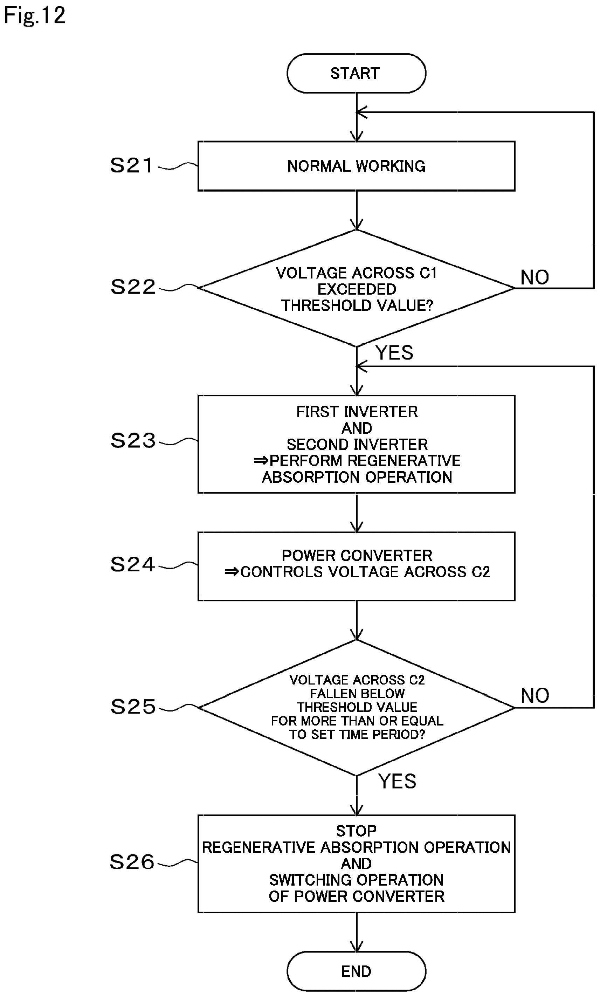

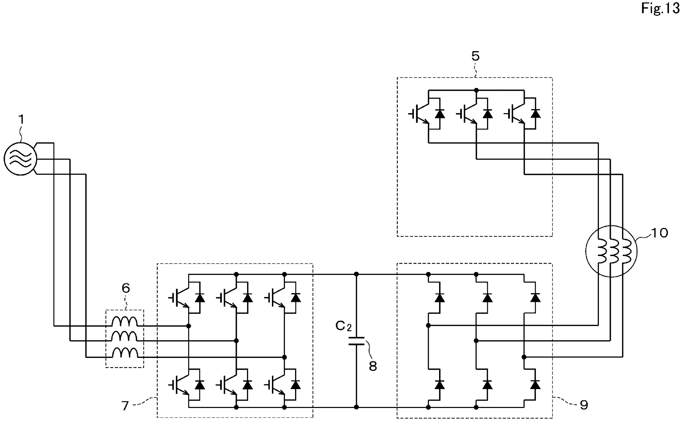

Figure 12 is an operation flow during regenerative absorption, and Figure 13 only shows elements to be energized in the first inverter 5 and the second inverter 9 when the regenerative absorption operation is performed. Since the short circuits 16 and 17 are brought into the open state during regenerative absorption in the fourth embodiment, illustration of the short circuits 16 and 17 is omitted in Figure 13. In addition, the operation of the short circuits 16 and 17 is also omitted in the operation flow in Figure 12. During execution at the time of normal working (S21), when the voltage across the first capacitor 4 or the like exceeds a threshold value defined in advance (YES in S22), the control unit 20 determines that regeneration in the motor 10 has occurred, and performs the regenerative absorption operation in Figure 13 (S23).

In addition, at this time, the power converter 7 is caused to operate as a power regeneration PWM rectifier. That is, switching of the power converter 7 is controlled to return power toward the power supply 1 such that C2 that absorbs regenerative power of the motor 10, that is, the voltage across the second capacitor 8, does not exceed a value within a rated voltage range of the element (S24). When the regenerative power is absorbed, either of the first and second inverters 5 and 9 does not drive the motor 10, so that no significant harmonics are produced. Thus, the power converter 7 does not need to perform the harmonic suppressing operation, and there is no problem if the power converter 7 is caused to operate as the power regeneration PWM rectifier. Then, while the voltage across the second capacitor 8 does not fall below the threshold value for more than or equal to the set time period (NO in S25), the process returns to step S3 and continues the regenerative absorption operation. When the voltage across the second capacitor 8 falls below the threshold value for more than or equal to the set time period (YES in S25), the regenerative absorption operation and switching control over the power converter 7 are stopped (S26).

In the regenerative absorption operation in step S23 shown in Figure 13, a neutral point of the motor 10 is formed by turning on all of the IGBTs on the upper arm side and turning off all of the IGBTs on the lower arm side in the first inverter 5. Thereafter, power will not flow from the motor 10 into the first capacitor 4, so that the first capacitor 4 will not have an overvoltage. On the other hand, the second inverter 9 is made equivalent to the configuration of the rectifier circuit 3 by turning off all the IGBTs. Accordingly, power flows from the motor 10 into the second capacitor 8. By thus performing the regenerative absorption operation when regeneration by the motor 10 occurs, regenerative power can be absorbed only by the second capacitor 8 having a relatively large capacity. In other words, the capacity of the second capacitor 8 is set at a capacity that can absorb regenerative power produced by the motor 10. Specifically, by setting the capacity of the second capacitor 8 at approximately several hundred microfarads to several thousand microfarads, an overvoltage can be prevented from occurring even at the time of regeneration. Furthermore, by causing the power converter 7 to operate as the power regeneration PWM rectifier in the regenerative absorption operation (S24), it is also possible to reduce the capacity of the second capacitor 8.

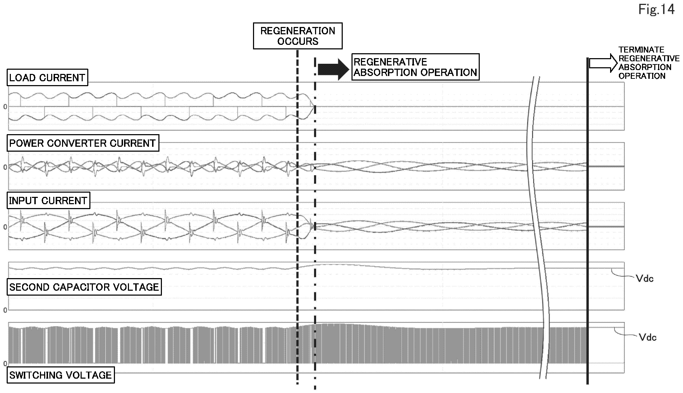

Figure 14 shows current and voltage waveforms of respective portions in the case in which the flow shown in Figure 13 is executed. Note that although the current waveforms have three phases, the waveforms are not shown distinctively as the three phases do not need to be distinguished herein. A "Load current" in the diagram is a current passed through the three-phase reactor 2, and an "input current" is a current input from the three-phase AC power supply 1 to the three-phase reactors 2 and 6. A "power converter current" is a current flowing in the three-phase reactor 6. A "capacitor voltage" is the terminal voltage of the second capacitor 8, and a "switching voltage" is a collector-emitter voltage of the IGBTs constituting the power converter 7.

In Figure 14, when regeneration of the motor 10 occurs and when the voltage of the first capacitor 4 not shown rises to a threshold value, the regenerative absorption operation is started. When the regenerative absorption operation is started, the voltage across the second capacitor 8 once rises, but is regenerated by the three-phase AC power supply 1 and gradually rises without rising extremely significantly, as the power converter 7 operates as the power regeneration PWM rectifier. Thereafter, when regeneration of the motor 10 terminates, the voltage across the second capacitor 8 decreases because of the operation of the power regeneration PWM rectifier. Then, when a time period in which the voltage across the second capacitor 8 falls below the threshold value becomes more than or equal to the set time period, switching of the power converter 7 is stopped, and the regenerative absorption and the power regeneration operation terminate. As a result, the switching voltage is fixed at Vdc, and the load current, the input current, and the power converter current all become "0", so that the regenerative absorption operation terminates. Note that while the power converter 7 is operating as the power regeneration PWM rectifier, a sinusoidal wave current in synchronization with the voltage of the three-phase AC power supply 1 flows as the input current.

In addition, in the determination on termination of the regenerative absorption operation in step S25, it may be determined "YES" in a case in which the voltage of the second capacitor 8 shown in Figure 14 is brought into a stable state. In addition, because actual regenerative power is produced for a short time period, termination may be determined based on a time period elapsed since the regenerative absorption operation is started.

### (Fifth Embodiment)

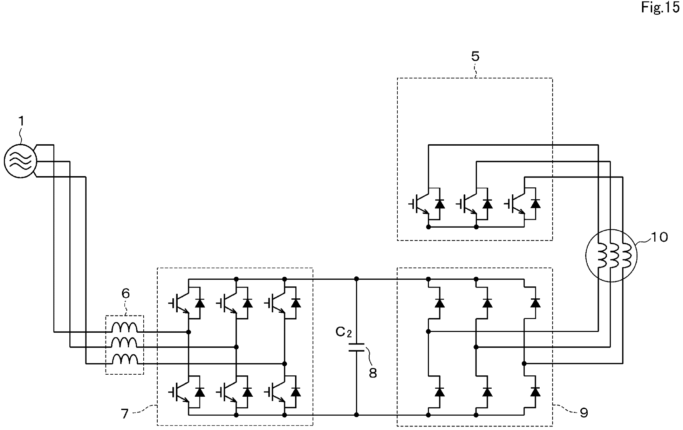

A fifth embodiment also shows an example of the regenerative absorption operation in the power conversion device 41 or 42. Figure 15 only shows elements to be energized in the first inverter 5 and the second inverter 9 when the regenerative absorption operation is performed, similarly to Figure 13. A difference from the third embodiment is that in the first inverter 5, the IGBTs on the upper arm side are all turned off, and the IGBTs on the lower arm side are all turned on. This case is effective in a case in which the driving power supply for the second inverter 9 is composed of a bootstrap circuit, as the IGBTs on the lower arm side will be turned on for a long time.

### (Other Embodiments)

In the aforementioned embodiments, production of regenerative power is detected when the voltage across the first capacitor 4 or the like exceeds the threshold value defined in advance (S22). The regenerative power occurs mainly when the motor 10 suddenly stops, that is, when the first inverter 5 and the second inverter suddenly stop. Therefore, by performing the regenerative absorption operation in a case in which a stop signal for the motor 10 is received from a host control system side or in which an overcurrent abnormality or the like is detected in the first inverter 5 so that the motor 10 should be emergently stopped, the terminal voltage of the first capacitor 4 can be prevented from becoming an overvoltage.

In addition, the following control may be performed by the control unit 20. The rectifier circuit 3 and the first inverter 5 shall constitute a first driving unit, and the power converter 7 and the second inverter 9 shall constitute a second driving unit. The control unit 20 performs a failure determination for these first and second driving units. Then, either of the short circuits 16 and 17 connected to one of the driving units that is determined as being in a failure state is brought into the short-circuit state, thereby driving the motor 10 only by the other one of the driving units that is determined as being in a normal state.

The semiconductor switches are not limited to IGBTs and may be power MOSFETs or the like, for example.

The AC power supply may be of a single phase.

When a magnitude relationship between the capacitances C1 and C2 of the first and second capacitors is set such that (C1 < C2) holds, it is not necessarily required to use a film capacitor as the first capacitor 4 and an electrolytic capacitor as the second capacitor 8. Storage batteries or batteries may be used as the first and second capacitors 4 and 8. In addition, the magnitude relationship between the capacitances C1 and C2 is not necessarily set such that (C1 < C2) holds.

Switching between the operation modes determined in steps S4, S7 shown in Figure 6 and steps S11, S12 shown in Figure 9 may be performed not only based on the input power to the motor, but also based on the rpm or load state, for example.

The heat pump equipment is not limited to the air conditioner. In addition, the power conversion device may be applied to equipment other than the heat pump equipment.

Although some embodiments of the present invention have been described, these embodiments have been presented by way of example and are not intended to limit the scope of the invention. These novel embodiments can be implemented in other various embodiments, and various omissions, replacements, and changes can be made within the scope not departing from the gist of the invention. These embodiments and modifications thereof are embraced in the scope and gist of the invention and embraced in the invention recited in the claims and the scope equivalent thereto.

### Reference Signs List

In the drawings, 1 indicates a three-phase AC power supply, 2 indicates a three-phase reactor, 3 indicates a rectifier circuit, 4 indicates a first capacitor (first power storage element), 5 indicates a first inverter (first power converter), 6 indicates a three-phase reactor, 7 indicates a power converter (third power converter), 8 indicates a second capacitor (second power storage element), 9 indicates a second inverter (second power converter), 10 indicates a motor, 16 and 17 indicate short circuits, 20 indicates a control unit, 21 indicates an air conditioner, 22 indicates a compressor, and 41 and 42 indicate power conversion devices.

## Claims

1. A power conversion device comprising:
a rectifier circuit that rectifies an AC voltage supplied from an AC power supply;
a first power storage element connected to a DC side of the rectifier circuit;
a first power converter that is composed of diodes and semiconductor switches connected in parallel to the first power storage element and that has each-phase output terminals to which one ends of each-phase windings of a motor are connected, the windings being independent;
a second power converter that has each-phase output terminals to which the other ends of the windings of the motor are connected and that is composed of diodes and semiconductor switches;
a second power storage element connected to a DC side of the second power converter;
a reactor branched from and connected to an interconnection line that connects the AC power supply and the rectifier circuit;
a third power converter that is composed of diodes and semiconductor switches connected between the reactor and the second power storage element;
a short circuit arranged so as to short-circuit the each-phase output terminals of the first power converter or the second power converter; and
a control unit that
controls switching of the third power converter so as to suppress harmonics that flows from the rectifier circuit toward the AC power supply, and
switches between and executes an operation mode of bringing the short circuit into an open state to drive the motor by the first power converter and the second power converter and an operation mode of bringing the short circuit into a short-circuit state to drive the motor only by either the first power converter or the second power converter.

2. A power conversion device comprising:
a rectifier circuit that rectifies an AC voltage supplied from an AC power supply;
a first power storage element connected to a DC side of the rectifier circuit;
a first power converter that is composed of diodes and semiconductor switches connected in parallel to the first power storage element and that has each-phase output terminals to which one ends of each-phase windings of a motor are connected, the windings being independent;
a second power converter that has each-phase output terminals to which the other ends of the windings of the motor are connected and that is composed of diodes and semiconductor switches;
a second power storage element connected to a DC side of the second power converter;
a reactor branched from and connected to an interconnection line that connects the AC power supply and the rectifier circuit;
a third power converter that is composed of diodes and semiconductor switches connected between the reactor and the second power storage element and that suppresses harmonics;
a first short circuit arranged so as to short-circuit the each-phase output terminals of the first power converter;
a second short circuit arranged so as to short-circuit the each-phase output terminals of the second power converter; and
a control unit that switches among and executes a plurality of operation modes obtained by combining short-circuit and open states of the first short circuit and the second short circuit and states in which the motor is driven by the first power converter and the second power converter.

3. The power conversion device according to claim 2, wherein the control unit switches among and executes
an operation mode of bringing the first short circuit and the second short circuit into the open state to drive the motor by both the first power converter and the second power converter and causing the third power converter to operate as an active filter circuit,
an operation mode of bringing the first short circuit into the open state and bringing the second short circuit into the short-circuit state to drive the motor only by the first power converter and causing the third power converter to operate as the active filter circuit, and
an operation mode of bringing the first short circuit into the short-circuit state and bringing the second short circuit into the open state to drive the motor only by the second power converter and causing the third power converter to operate as a PWM rectifier.

4. The power conversion device according to claim 1 or 2, wherein a maximum amount of energy stored in the second power storage element is larger than a maximum amount of energy stored in the first power storage element and is set at a capacity that can absorb regenerative power produced by the motor.

5. The power conversion device according to claim 4, wherein the first power storage element is a film capacitor, and the second power storage element is an electrolytic capacitor.

6. The power conversion device according to claim 1, wherein the control unit performs a regenerative absorption operation by turning off all of the semiconductor switches of the second power converter and turning on or off the semiconductor switches of the first power converter when the motor produces regenerative power in the open state of the short circuit.

7. The power conversion device according to claim 6, further comprising
a voltage detection unit that detects a terminal voltage of the first power storage element, wherein
the control unit performs the regenerative absorption operation when the terminal voltage exceeds a threshold value defined in advance.

8. The power conversion device according to claim 6, wherein the control unit performs the regenerative absorption operation when rotation of the motor is to be stopped.

9. The power conversion device according to claim 2, wherein the control unit brings the first short circuit and the second short circuit into the short-circuit state when rotation of the motor is to be stopped.

10. The power conversion device according to claim 2, wherein the control unit performs a failure determination for a first driving unit composed of the rectifier circuit and the first power converter and a second driving unit composed of the third power converter and the second power converter, and brings one of the short circuits that is connected to one of the driving units that is determined as being in a failure state into the short-circuit state, thereby driving the motor only by the other one of the driving units that is determined as being in a normal state.

11. The power conversion device according to claim 1, wherein
the short circuit is arranged so as to short-circuit the each-phase output terminals of the first power converter, and
the control unit switches between an operation mode of bringing the short circuit into the open state to drive the motor by the first power converter and the second power converter and causing the third power converter to operate as an active filter circuit and an operation mode of bringing the short circuit into the short-circuit state to drive the motor only by the second power converter and causing the third power converter to operate as a PWM rectifier.

12. The power conversion device according to claim 1, wherein
the short circuit is arranged so as to short-circuit the each-phase output terminals of the second power converter, and
the control unit switches between an operation mode of bringing the short circuit into the open state to drive the motor by the first power converter and the second power converter and causing the third power converter to operate as an active filter circuit and an operation mode of bringing the short circuit into the short-circuit state to drive the motor only by the first power converter and causing the third power converter to operate as the active filter circuit.

13. The power conversion device according to any one of claim 1, 2, or 12, wherein the control unit switches among the plurality of operation modes based on a parameter related to input power to the motor.

14. Heat pump equipment comprising:
the power conversion device as set forth in any one of claim 1, 2, or 12; and
the motor, wherein
a compressor is driven by the motor.

15. Heat pump equipment comprising:
the power conversion device as set forth in claim 13; and
the motor, wherein
a compressor is driven by the motor.
